Europäisches Patentamt

(19) European Patent Office

Office européen des brevets

(11) Publication number: **0 006 925**
**B1**

(12) **EUROPEAN PATENT SPECIFICATION**

(45) Date of publication of patent specification: 17.02.82

(21) Application number: 78900148.4

(22) Date of filing: 09.10.78

(86) International application number:
PCT/SE78/00056

(87) International publication number:
WO 79/00192 19.04.79 Gazette 79/8

(51) Int. Cl.³: **B 23 Q  11/10,**
**B 01 D  21/00,**
**B 24 B  55/02,  C 10 M  11/00**

㊹ Method and apparatus for cleaning cutting fluid.

(30) Priority: 10.10.77 SE 7711328

(43) Date of publication of application:
23.01.80 Bulletin 80/2

(45) Publication of the grant of the European patent:
17.02.82 Bulletin 82/7

㊽ Designated Contracting States
FR

㊻References cited:
DE - A - 2 213 005
GB - A - 1 321 173
SE - B - 395 123

Maschinenmarkt. Jg. 76 (1970)
Nr 96, Würzburg,
J. Streifinger, "Zentrale Kühlschmieranlagen",
pages 2216 and 2218

(73) Proprietor: **ALFA-LAVAL AB**
**Box 500**
**S-147 00 Tumba (SE)**

(72) Inventor: **LEE, Hyosong, Martin**
**Broängsvägen 31**
**S-147 00 Tumba (SE)**

(74) Representative: **Fort, Jacques et al,**
**CABINET PLASSERAUD 84, rue d'Amsterdam**
**F-75009 Paris (FR)**

Method and apparatus for cleaning cutting fluid

Technical field

The present invention relates to a method of cleaning cutting fluid used for metal machining, at which the cleaning of the cutting fluid takes place in a central cleaning plant and an arrangement for carrying through the method The cleaning plant cleans the cutting fluid from a number of collecting tanks.

In connection with metal machining cutting fluids have been used since long for lubricating and cooling. The cutting fluid shall cool the tool used for the cutting, the workpiece and the formed chips and reduce the friction by forming a lubricating film between the sliding surfaces. Usually the cutting fluid contains among all corrosion protecting agents, emulsifiers and bactericides. Every metal cutting machine has in collecting tank a supply of cutting fluid and from the tank the cutting fluid is pumped to a nozzle and sprayed over the workpiece and the tool. When the cutting fluid passes the cutting spot it brings along larger and smaller metal chips. The larger metal chips are separated by passing the fluid through some kind of straining means, for example a plate or a case provided with small openings, on its way to the collecting tank. The cutting fluid is in addition to the metal chips often contaminated by oil, which spreads as a surface layer over the cutting fluid. In spite of the bactericides a growth of bacteria may take place under the film of oil, which results in very ill-smelling breaking down products. The staff handling the metal cutting machines run the risk of infections on arms and hands as a consequence of the fact that the cutting fluid is contaminated with bacteria, solid particles and oil.

Background art

Earlier contaminated cutting fluid has been cleaned centrally by conveying the cutting fluid through pipelines in and below the floor to a cleaning plant in connection with a central tank. Contaminants of metal have been separated by passing the cutting fluid through different types of filter. Oil has been removed from the surface of the tank by means of a bandskimmer. It is very difficult to remove all of the oil without bringing along a large part of cutting fluid, which makes the method uneconomical. For illustration of that prior art, reference may be made to GB-A 1 321 173.

According to the invention a method and apparatus for cleaning of cutting fluid is now proposed which may easily be installed in existing engineering plants without any expensive changes or rebuildings and which implies that important advantages are achieved for the staff at the metal cutting machines, which no longer have to be exposed to ill-smelling gases and skin irritation by metal chips and oil in the cutting fluid.

Disclosure of invention

The method according to the invention is characterized in that contaminated cutting fluid by means of vacuum is conveyed from collecting tanks at the cutting places to a container, which is connected to a vacuum pump. From the container the contaminated oil is conveyed to a cleaning plant and is thereafter returned to the collecting tank. By sucking the cutting fluid in this way from the collecting tank to the cleaning plant it is possible to avoid bulky transporting arrangements in and below the floor or an expensive manual handling and also to avoid the use of pumps which may be damaged by the small metal particles which follow the cutting fluid. A cleaning system is described which is very flexible. It may easily be adapted to the location of the cutting machines in the plant and further cutting machines may easily be connected to the cleaning plant. The cleaning of the cutting fluid may take place continuously when the metal cutting machine is working. It is also possible to suck the cutting fluid to the cleaning plant at shorter or longer intervals.

The main part of the cutting fluid may be brought to circulate in order to cool and lubricate a tool and a workpiece, while a lesser part of the content in the collecting tank is sucked away and conveyed to the cleaning plant. This ensures that if some fault should occur in the cleaning plant there is anyhow enough fluid to make metal cutting possible.

In order to convey the cutting fluid back to the cutting place the cleaned cutting fluid may be put under pressure, when the cutting fluid has passed the cleaning plant.

The contaminated cutting fluid is with advantage cleaned by passage through a separation tank. In this separation tank a separation by means of gravity takes place since light contaminants, as oil, collected in the upper part of the separation tank whereas metal chips and heavy contaminants sink to the bottom of the separation tank. From the separation tank a first fraction containing cutting fluid and light contaminants is withdrawn and this fraction is led to a separator, for example a centrifugal separator. The cleaned cutting fluid withdrawn from the separator is together with a second fraction from the separation tank mainly containing cutting fluid conveyed to a second tank in which the collected cutting fluid is put under pressure and returned to the collecting tank at the cutting place. Owing to this combination of cleaning steps an efficient cleaning of the contaminated fluid is obtained with relatively simple means as well as an essential reduction of the amount of bacteria, solid particles and oil in the cutting fluid.

According to the invention apparatus for carrying through the described method of cleaning cutting fluid is also described. This arrangement comprises a pipeline arranged to be placed under vacuum, which pipeline at one end opens under the surface in a collecting tank for cutting fluid and at its other end is connected to a container, which in its turn is connected to the vacuum pump. The apparatus also comprises a cleaning plant for contaminated cutting fluid which has been sucked away from the collecting tank and a second pipeline by the aid of which cutting fluid is returned to the collecting tank.

The proposed apparatus is further preferably provided with a second tank for cleaned cutting fluid, which is connected between the cleaning plant and the second pipeline, which second tank is provided with means in order to put the cutting fluid under pressure.

The cleaning plant may comprise a separation tank with a tangential inlet for contaminated cutting fluid and a first outlet for a first fraction containing cutting fluid and light contaminants and a second outlet for a second fraction consisting mainly of cutting fluid. The first fraction is led to a separator, for example a centrifugal separator, and from this a heavy phase containing cleaned cutting fluid and a light phase containing light contaminants are withdrawn. The outlet for heavy phase from the separator and the second outlet of the separation tank are connected to the second tank mentioned above.

The separation tank is with advantage designed such that in its centre there is arranged an insertion with walls which inside the insertion define two fluid chambers delimited from the fluid chamber in the separation tank. The first of these fluid chambers has an inlet which consists of a brim inlet from the fluid chamber in the separation tank and an outlet which extends through the fluid chamber in the separation tank. The second fluid chamber has an inlet which is connected to the fluid chamber in the separation tank in such a manner that the same liquid level is obtained both in the separation tank and in the second fluid chamber and an outlet which extends out of the separation tank. A level-holding means is arranged to sense the liquid level of the second fluid chamber and supply clean fluid when the level sinks.

Brief description of drawings

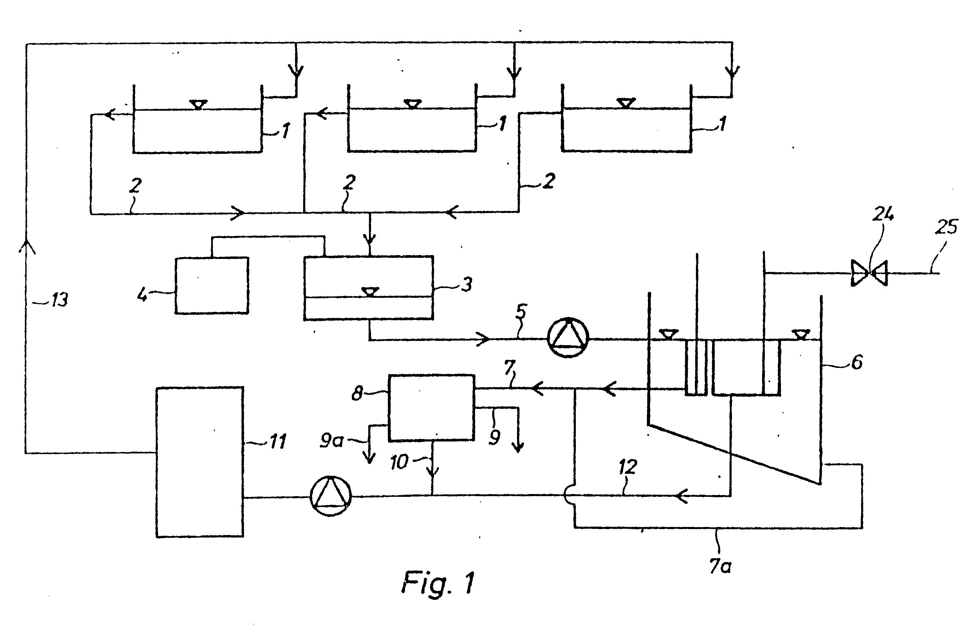

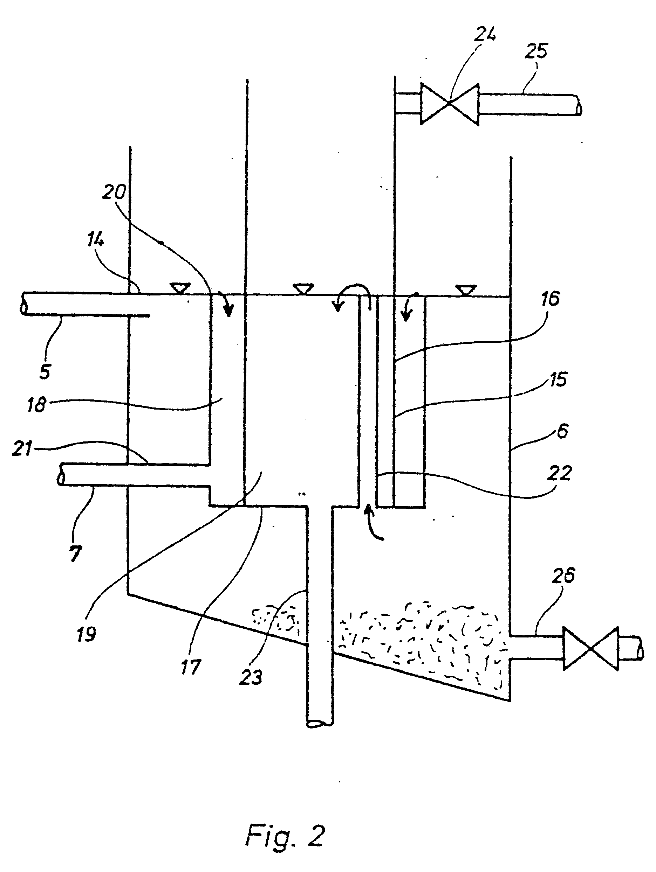

The proposed method of cleaning cutting fluid and apparatus for carrying through this method are described closer with reference to the enclosed drawing, Figure 1 of which shows a flow chart of a preferred embodiment of the invention and figure 2 of which schematically shows an embodiment of a separation tank used for the described embodiment. In the flow chart obvious details like valves have been omitted.

Best mode of carrying out the invention

In Fig. 1 a number of collecting tanks for cutting fluid at cutting machines are shown. From the collecting tanks 1 contaminated cutting fluid is conveyed to a container 3, by way of a pipeline 2. The pipeline 2 may with advantage be arranged at some height over the metal cutting machines, in the same way as in a pipeline milking plant. The container 3 is connected to a vacuum pump 4 and by means of this the container 3 and the pipeline 2 are put under vacuum. At each connection the pipeline 2 ends just below the surface in the collecting tank. The cutting fluid contaminated with oil is sucked on to the cleaning plant, while the heavier metal particles remain on the bottom of the collecting tank. From the container 3 the contaminated cutting fluid is conveyed to the separation tank 6 by way of a pipeline 5. The inlet for cutting fluid is arranged such that the cutting fluid is given a tangential movement in the separation tank. Light contaminants are at this gathered near the surface in the middle of the separation tank and from there a fraction is withdrawn which is directed to a separator 8 by way of a pipeline 7. The mixture of cutting fluid, sludge and metal particles, which are separated in the separation tank 6, is conveyed to pipeline 7 by way of pipeline 7a.

In the shown embodiment of the invention the separator consists of a centrifugal separator but it is also possible to separate light contaminants from the cutting fluid by means of a skimmer, while heavy contaminants are separated by means of filter.

Through the light phase outlet 9 of the centrifugal separator oil and other light contaminants are withdrawn and through the sludge outlet 9a solid contaminants. The obtained heavy phase which contains cleaned cutting fluid is conveyed to a second tank 11 for cleaned cutting fluid by way of a pipeline 10. A second fraction from the separation tank which mainly contains cleaned cutting fluid is also transported to the tank 11 by way of a pipeline 12. The cutting fluid is put under pressure by means which not are shown and returned by way of the pipeline 13 to the collecting tanks 1 at the cutting machine. Also pipeline 13 may be arranged over the machines. The collecting tanks are with advantage provided with liquid level indicators (not shown in the drawing) in order to hinder that the tanks overflow. There is also a throttling at the inlet of pipeline 2 in order to control the amount of air sucked into the vacuum system (not shown in the drawing).

In Fig. 2 there is shown the separation tank 6 with a tangential inlet 14 connected with the pipeline 5. In the separation tank 6 there is also arranged an insertion with two coaxial, cylindrical walls 15, 16 and a bottom 17. In the insertion these walls separate two fluid chambers 18, 19 delimited from the fluid chamber in the separation tank. In this embodiment the insertion consists of two coaxial cylinders but it may of course be designed in some other way as long as the in- and outlets of the insertion are designed such that the same flow conditions that are described below are obtained. The upper edge 20 of the cylindrical wall 15 is arranged such that the edge is situated just below the liquid level in the separation tank. The inlet to the fluid chamber 18 consequently consists of an annular brim inlet over the edge 20. The fluid chamber 18 also has an outlet 21, which extends through the separation chamber and is connected to the pipeline 7. Inside the wall 16 there is a second fluid chamber 19. In this second fluid chamber 19 there is arranged a pipe 22, the lower part of which is fastened to the bottom of the insertion and the upper end of which is situated at the same level as the edge 20. Through this pipe the fluid chamber 19 is connected to the fluid chamber in the separation tank. In the bottom 17 of the insertion there is also arranged an outlet 23 from the fluid chamber 19 which is connected to the pipeline 12. A level sensing means (not shown in the drawing) for example a float, is also arranged in the fluid chamber 19, which means actuate a valve 24 in a feed pipe 25 for clean cutting fluid. In the bottom of the separation tank there is also an outlet pipeline 26 for sludge separated in the separation tank, which pipeline is connected to the pipeline 7a.

The separation tank described is intended to work in the following way. When the contaminated cutting fluid is conveyed tangentially into the separation tank light contaminants are gathered in the middle of the tank and flow over the brim inlet into the fluid chamber 18. Heavy contaminants on the other hand sink towards the bottom of the tank and are collected there. Owing to the fact that the inlet to the fluid chamber 19 is arranged on a certain depth in the separation tank the cutting fluid that is collected in the fluid chamber 19 will be relatively clean.

The cleaning of the cutting fluid takes place in no less than four steps. The first step consists of the preliminary separation of heavier metal contaminants in the collecting tank, while an upper fraction of the collecting tank is sucked to the cleaning plant. Step two consists of the passage of the container 3 in which a certain part of the heavy particles are gathered at the bottom of the container, which particles intermittently are withdrawn from the bottom Step three consists of the cleaning in the separation tank which is described above. Step four consists of the cleaning in the centrifugal separator from which, apart from the two liquid phases, a sludge phase consisting of small metal particles is withdrawn continuously or intermittently, which metal particles have not been separated in earlier separation steps.

A reduction of the amount of bacteria has been shown experimentally, since measurements have shown that the amount of bacteria, when cleaning as described has diminished from $10^9$ bacteria/ml to $10^6$ bacteria/ml, which is considered as a satisfactory value. That the amount of bacteria has diminished is supposed to depend on the fact that around the metal particles there is a thin film of oil, in which a growth of bacteria takes place. When the small metal particles are separated a certain amount of bacteria accordingly follow them.

**Claims**

1. A method for cleaning cutting fluid supplied to a plurality of metal cutting positions, whereby a fluid is transferred from a collecting tank (1) at each metal cutting location to a central cleaning plant and upon there returns to the metal cutting locations, characterized in that the fluid is transferred from the collecting tanks (1) to the cleaning plant (6,8) by way of a container (3) exposed to a vacuum by means of a vacuum pump (4)''.

2. Method according to claim 1, characterized in that the main part of the cutting fluid is circulated at the metal cutting locations for cooling and lubricating, while a smaller part of the content in the collecting tanks (1) is sucked away and conveyed to the cleaning plant (6,8).

3. Method according to claim 1 or 2, characterized in that the cutting fluid is put under pressure when it is returned from the cleaning plant (6,8).

4. Method according to claim 1—3 characterized in that the contaminated cutting fluid in the cleaning plant (6,8) is brought to pass a separation tank (6) in which a separation due to gravity takes place, that a fraction containing cutting fluid and mainly light contaminants is withdrawn from the separation tank (6) and is led to a separator (8), for example a centrifugal separator, and that the cleaned cutting fluid that is withdrawn from the separator, together with a fraction withdrawn from the separation tank (6), which mainly contains cutting fluid, is led to a second tank (11) in which the collected cutting fluid is put under pressure and returned to the collecting tank (1).

5. Apparatus for carrying through the method according to claim 1, characterized in that it comprises a first pipeline (2) arranged to be put under vacuum and which at one end opens under the surface in the respective collecting tank (1) for cutting fluid and at its other end is connected to the container (3), which is connected to the vacuum pump (4), cleaning plant (6,8) for contaminated cutting fluid which has been sucked from the respective collecting tank (1) and a second pipeline (13) by means of which cutting fluid is returned to the respective collecting tank (1).

6. Apparatus according to claim 5, characterized in that a second tank (11) for cleaned cutting fluid is connected between the cleaning plant (6,8) and the second pipeline (13), which second tank (11) is provided with means to put the cutting fluid under pressure.

7. Apparatus according to claim 6, characterized in that the cleaning plant (6,8) comprises a separation tank (6) with a tangential inlet for contaminated cutting fluid and a first outlet for a first fraction comprising cutting fluid and light contaminants, a second outlet for a second fraction consisting mainly of cutting fluid, a separator (8) for example a centrifugal separator, to which the first fraction is conveyed and from which a heavy phase consisting of cleaned cutting fluid, and a light phase consisting of light contaminants are withdrawn, at which the outlet for heavy phase and the second outlet from the separation tank are connected to the said second tank (11)

8. Apparatus according to claim 7 characterized in that in the centre of the separation tank there is arranged an insertion with walls (15, 16) which inside the insertion delimit two fluid chambers (18, 19) separate from the fluid chamber in the separation tank, where the first separate fluid chamber (18) has an inlet consisting of a brim inlet from the fluid chamber in the separation tank and an outlet (21) which extends through the separation tank, while the second separate fluid chamber (19) has an inlet (21) which is connected to the fluid chamber in the separation tank in such a way that the same liquid level is obtained both in the separation tank and in the second fluid chamber (19) and an outlet (23) which extends out through the separation tank, at which a level-holding means is arranged to sense the level of cutting fluid in the second fluid chamber (19) and an outlet (23) which extends out through the separation tank, at which a level-holding means is arranged to sense the level of cutting fluid in that second fluid chamber (19) and supply new cutting fluid, when the level sinks.

**Revendications**

1. Méthode pour nettoyer un fluide de coupe fourni à plusieurs emplacements de coupe de métal, suivant laquelle un fluide est transféré depuis un bac collecteur à chaque emplacement de coupe de métal jusqu'à une installation centrale de nettoyage et en revient aux emplacements de coupe de métal, caractérisée en ce que le fluide est transféré depuis les bacs collecteurs (1) jusqu'à l'installation de nettoyage (6, 8) par l'intermédiaire d'un récipient (3) mis sous vide à l'aide d'une pompe à vide (4).

2. Méthode suivant la revendication 1, caractérisée en ce que l'on fait circuler la majeure partie du fluide de coupe à l'emplacement de coupe de métal pour refroidissement et lubrification, tandis qu'une partie faible du contenu des bacs collecteurs (1) est aspirée et amenée à l'installation de nettoyage (6, 8).

3. Méthode suivant la revendication 1 ou 2, caractérisée en ce que le fluide de coupe est mis sous pression lorsqu'il est ramené de l'installation de nettoyage (6, 8).

4. Méthode suivant la revendication 1—3, caractérisée en ce que le fluide de coupe, contaminé, dans l'installation de nettoyage est amené à traverser une cuve de séparation dans laquelle se produit une séparation par gravité, en ce qu'une fraction contenant le fluide de coupe et surtout des contaminants légers est retirée de la cuve de séparation (6) et amenée à un séparateur (8), par exemple un séparateur centrifuge, et en ce que le fluide de coupe nettoyé extrait de séparateur, ainsi qu'une fraction retirée de la cuve de séparation, que contient surtout du fluide de coupe, est amené à une seconde cuve (11) dans laquelle le fluide de coupe collecté est mis sous pression et renvoyé au bac collecteur (1).

5. Appareillage pour mettre en oeuvre la méthode suivant la revendication 1, caractérisé en ce qu'il comprend une première conduite (2) prévue pour être mise sous vide et qui s'ouvre à une extrémité sous la surface du bac collecteur correspondant (1) pour du fluide de coupe et, à son autre extrémité, est reliée au récipient (3) qui est connecté à la pompe à vide (4), l'installation de nettoyage (6, 8) pour le fluide de coupe contaminé qui a été aspiré de bac collecteur correspondant, et une seconde conduite (13) par l'intermédiaire de laquelle le fluide de coupe est ramené au bac collecteur (1) correspondant.

6. Appareillage suivant la revendication 5, caractérisé en ce qu'une deuxième cuve pour le fluide de coupe nettoyé est connectée entre l'installation de nettoyage (6, 8) et la deuxième conduite (13), ladite deuxième cuve étant munie de moyens pour mettre le fluide de coupe sous pression.

7. Appareillage suivant la revendication 6, caractérisé en ce que l'installation de nettoyage (6, 8) comprend une cuve de séparation (6) à entrée tangentielle pour le fluide de coupe contaminé et une première sortie pour une première fraction qui comprend du fluide de coupe et des contaminants légers, une seconde sortie pour une seconde fraction constituée essentiellement de fluide de coupe, un séparateur (8), par exemple un séparateur centrifuge, auquel est amenée la première fraction et duquel une phase lourde constituée de fluide de coupe nettoyé et une phase légère constituée de contaminants légers sont extraites, la sortie de phase lourde et la seconde sortie de la cuve de séparation étant reliées à ladite deuxième cuve.

8. Appareillage suivant la revendication 7, caractérisé en ce qu'au centre de la cuve de séparation est disposé un bloc insérable ayant des parois (15, 16) qui délimitent dans le bloc insérable deux chambres à fluide (18, 19) séparées de la chambre à fluide dans la cuve de séparation, la première chambre à fluide séparée (18) ayant une entrée constituée par un déversoir depuis la chambre à fluide dans la cuve de séparation et une sortie (21) qui traverse la cuve de séparation tandis que la seconde chambre à fluide séparée (19) a une entrée (22) qui est reliée à la chambre à fluide dans la cuve de séparation de telle façon que l'on obtienne le même niveau de liquide dans le cuve de séparation et dans la seconde chambre à fluide (19) et une sortie (23) qui traverse la cuve de séparation, des moyens de maintien de niveau étant prévus pour détecter le niveau de fluide de coupe dans la seconde chambre à fluide et pour fournir de fluide de coupe neuf lorsque le niveau baisse.

## Patenansprüche

1. Verfahren zum Reinigen von Schneidflüssigkeit, die mehreren Metallschneidestellen zugeführt wird, wobei eine Flüssigkeit vom Sammeltank (1) an jeder Metallschneidestelle der zentralen Reinigungsanlage zugefürt wird und von wo aus die Flüssigkeit zu den Metallschneidestellen zurückkehrt, dadurch gekennzeichnet, dass die Füssigkeit aus den Sammeltanks (1) durch einen Behälter (3), der einer Saugung durch eine Saugpumpe (4) ausgesetzt ist zur Reinigungsanlage (6, 8) transportiert wird.

2. Verfahren nach Anspruch 1, dadurch gekennzeichnet, dass man den Hauptteil der Schneidflüssigkeit an der Metallschneidestelle zum Kühlen und Schmieren im Umlauf hält, während ein kleinerer Teil des Inhalts in den Sammeltanks abgesaugt und zur Reinigungsanlage (6, 8) gebracht wird.

3. Verfahren nach Anspruch 1 oder 2, dadurch gekennzeichnet dass man die Schneidflüssigkeit unter Druck setzt, wenn man sie aus der Reinigungsanlage (6, 8) zurückführt.

4. Verfahren nach Anspruch 1 bis 3, dadurch gekennzeichnet, dass man die verschmutzte Schneidflüssigkeit in der Reinigungsanlage (6, 8) durch einen Trenntank führt, in dem eine Abschneidung unter der Schwerkraft stattfindet, dass man eine Schneidflüssigkeit und hauptsächlich leichte Verunreinigungen enthaltende Fraktion aus dem Trenntank abzieht und einem Separator wie beospielsweise einer Trennschleuder zuführt und dass man die gereinigte Schneidflüssigkeit vom Separator abzieht, gemeinsam mit einem aus dem Trenntank, der hauptsächlich Schneidflüssigkeit enthält, abgezogenen Fraktion zu einem zweiten Tank führt in dem die gesammelte Schneidflüssigkeit unter Druck gesetzt wird, und sie zum Sammeltank zurückführt.

5. Vorrichtung zum Durchführen des Verfahrens nach Anspruch 1, gekennzeichnet durch eine erste Rohrleitung (2), die unter Unterdruck gesetzt werden kann und mit einem Ende unter der Oberfläche in dem jeweiligen Sammeltank (1) für Schneidflüssigkeit mündet und mit ihrem anderen Ende an einen Behälter (3) angeschlossen ist, der mit einer Saugpumpe (4) verbunden ist, durch eine Reinigungsanlage (6, 8) für aus dem jeweiligen Sammeltank (1) abgesaugte verschmutzte Schneidflüssigkeit und durch eine zweite Rohrleitung (13), mit der die Schneidflüssigkeit wieder in den jeweiligen Sammeltank (1) zurückgeführt wird.

6. Vorrichtung nach Anspruch 5, dadurch gekennzeichnet, dass ein zweiter Tank (11) für gereinigte Schneidflüssigkeit zwischen die Reinigungsanlage und die zweite Rohrleitung (13) geschaltet ist und Mittel aufweist, um die Schneidflüssigkeit unter Druck zu setzen.

7. Vorrichtung nach Anspruch 6, dadurch gekennzeichnet, dass die Reinigungsanlage einen Trenntank (6) mit einem Tangentialeinlass für verschmutzte Schneidflüssigkeit, einem ersten Auslass für eine erste Franktion aus Schneidflüssigkeit und leichten Verunreinigungen und einen zweiten Auslass für eine zweite Fraktion hauptsächlich aus Schneidflüssigkeit und einen Separator (8) beispielsweise in Form einer Trennschleuder aufweist, dem die erste Fraktion zugeführt wird und von dem eine schwere Phase aus gereinigter Schneidflüssigkeit und eine leichte Phase aus leichten Verunreinigungen abgenommen werden, wobei der Auslass für die schwere Phase und der zweite Auslass des Trenntanks an den zweiten Tank (11) angeschlossen sind.

8. Vorrichtung nach Anspruch 7, dadurch gekennzeichnet, dass in der Mitte des Trenntanks ein Einstaz mit Wänden (15, 16) angeordnet ist, die im Einsatz zwei Strömungsmittlekammern (18, 19) bilden, die von der Strömungsmittelkammer im Trenn-tank getrennt sind, wobei die erste getrennte Kammer (18) als Einlass einen Überlaufrand aus der Strömungskammer im Trenntank und einen Auslass (21) aufweist, der durch den Trenntank verläuft, während die zweite getrennte Kammer (19) einen Einlass (21), der an die Strömungsmittelkammer im Trenntank so angeschlossen ist, dass man den gleichen Spiegel im Trenntank wie in der Kammer (19) erhält, und einen Auslass (23) aufweist, der durch den Trenntank verläuft, wobei eine Spiegelregelung vorgesehen ist, um den Spiegel der Schneidflüssigkeit in der zweiten Strömungsmittelkammer (19) zu erfassen und frische Schneidflüssigkeit zuzuführen, wenn der Spiegel sinkt.

Fig. 1

0006925

Fig. 2